# DEMANDE DE BREVET EUROPEEN

(11) **EP 0 882 542 A1**
(43) Date de publication de la demande: **09.12.1998**
(21) Numéro de dépôt: 98401153.6
(22) Date de dépôt: 14.05.1998
(51) Int. Cl.: B23K 33/00, B23K 9/007, E06B 1/56

(54) **Disposition de montage d'une porte métallique dans une ouverture d'une cloison métallique**

(30) Priorité: 05.06.1997 FR 9706970
(71) Demandeur: CHANTIERS DE L'ATLANTIQUE, 75116 Paris (FR)
(72) Inventeur: Paul, Dominique, 44410 Saint-Uyphard (FR)
(74) Mandataire: Gosse, Michel

(57) **Abrégé**

Disposition de montage d'une porte métallique dans une ouverture (13) d'une cloison métallique (12), caractérisée par le fait que le montage est effectué par le moyen de profilés métalliques de positionnement (14, 15, 16) à section en 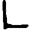 , l'une des ailes du 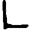 étant soudée à recouvrement contre le bord de l'ouverture (13) de ladite cloison (12) et en ce que le dormant de la porte comporte des profilés métalliques (17, 18, 19) à section, coportant trois tronçons disposés en 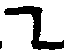 , soudés par le tronçon central contre l'autre aile desdits profilés de positionnement (14, 15, 16), les soudures desdits profilés de positionnement et desdits profilés métalliques étant effectuées par un petit cordon de soudure contre la paroi de trous oblongs effectués sur l'une des deux pièces à souder et sur une partie seulement de la longueur du périmètre de ladite paroi desdits trous.

## Description

La présente invention concerne une disposition de montage d'une porte métallique dans une ouverture d'une cloison métallique.

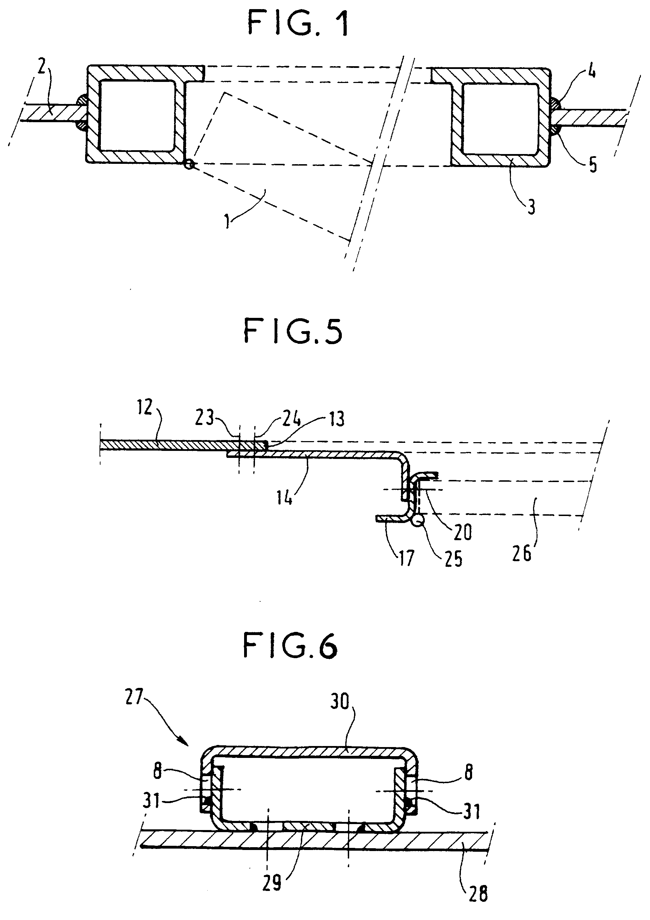

La figure 1 est un schéma représentant un mode classique de montage d'une porte incendie métallique 1 dans une cloison métallique 2 de séparation de deux locaux, d'un navire.

Pour ce faire, la cloison 2 est prédécoupée en atelier selon une ouverture de dimensions inférieures à celles du dormant 3 de la porte. La cloison doit ensuite être redressée puis tracée, à bord, selon les dimensions définitives précises du dormant 3, avec, dans les angles, un dégagement en arrondi vers l'extérieur. On exécute ensuite la découpe précise, à bord, selon ce tracé avec meulage et ajustage, puis soudage du dormant 3 dans l'ouverture pratiquée, par un cordon de soudure continue 4 sur l'une des faces et par une soudure discontinue 5 de l'autre côté, de 2,5 cm de long tous les 30 cm. Il faut enfin boucher, par des plaques soudées en continu, les trous de la cloison 2 dans les angles du dormant 3 résultant du dégagement en arrondi des angles comme dit ci-dessus. Ces dégagements en arrondis sont nécessaires pour éviter la déchirure de la cloison de séparation 2, dans les angles, lors du soudage du dormant 3 dans l'échancrure de la cloison.

Cette procédure de montage est longue et coûteuse.

L'invention a ainsi pour objet une disposition de montage d'une porte métallique dans une ouverture d'une cloison métallique, caractérisée par le fait que le montage est effectué par le moyen de profilés métalliques de positionnement à section en 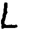 , l'une des ailes du 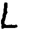 étant soudée à recouvrement contre le bord de l'ouverture de ladite cloison et en ce que le dormant de la porte comporte des profilés métalliques à section, comportant trois tronçons disposés en 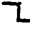 , soudés par le tronçon central contre l'autre aile desdits profilés de positionnement, les soudures desdits profilés de positionnement et desdits profilés métalliques étant effectuées par un petit cordon de soudure contre la paroi de trous oblongs effectués sur l'une des deux pièces à souder et sur une partie seulement de la longueur du périmètre de ladite paroi desdits trous.

Selon une autre caractéristique, un seuil de porte, constitué d'un profil de section en 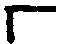 , qui est une partie intégrante du dormant de porte, est emboîté et soudé dans un profil de section en 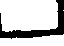 , préalablement soudé au sol, les soudures étant effectuées par le procédé ci-dessus.

On va maintenant donner la description d'un exemple de mise en oeuvre de l'invention en se reportant au dessin annexé dans lequel :
- La figure 1, déjà commentée représente schématiquement un mode de montage, selon l'art antérieur, d'une porte métallique dans l'ouverture d'une cloison métallique d'un navire.
- La figure 2 montre en élévation, en coupe selon II-II de la figure 4, un montage de porte incendie sur un navire, conforme à l'invention.
- La figure 3 est une coupe selon III-III de la figure 2.
- La figure 4 est une coupe selon IV-IV de la figure 2.
- La figure 5 est une vue agrandie du détail repéré V sur la figure 4.
- La figure 6 est une vue agrandie du détail repéré VI sur la figure 3.

L'exemple décrit se rapporte ainsi au montage d'une porte incendie dans l'ouverture d'une paroi de séparation coupe-feu d'un navire.

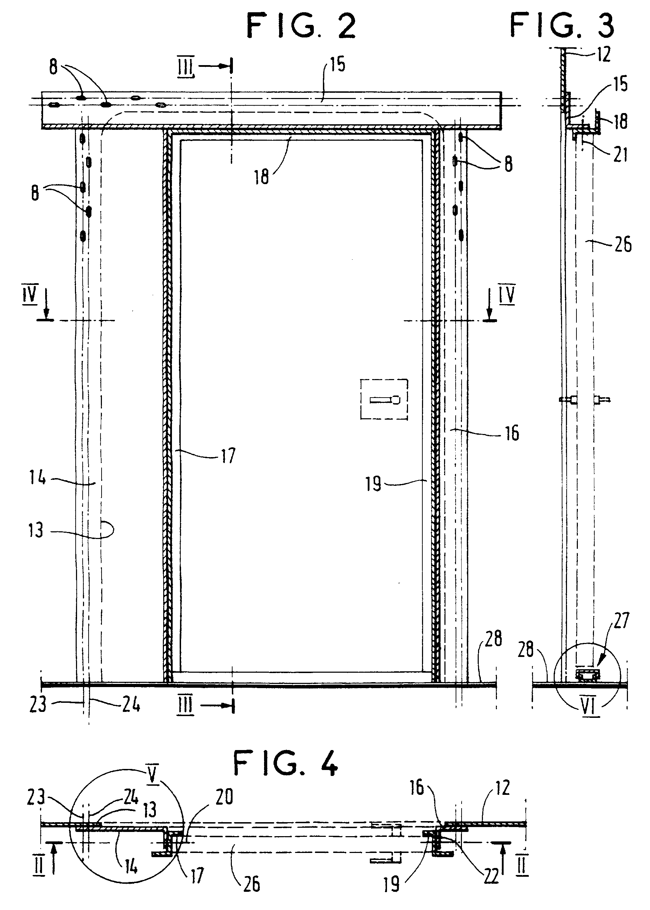

En se référant aux figures 2, 3 et 4, on voit une cloison métallique 12 dans laquelle a été découpée en atelier une ouverture. Le tracé de cette ouverture est visible sur la figure 1 par le trait interrompu référencé 13. Contrairement à ce qui a été dit pour l'art antérieur en référence à la figure 1, la découpe de l'ouverture 13 est ici définitive et ses cotes ne sont pas précises.

Lorsque la cloison a été montée à bord, le montage de la porte est fait de la façon suivante :

On vient régler la porte dans l'ouverture 13 par rapport à un axe prévu qui n'est pas nécessairement celui de l'ouverture 13 et verticalement par des pièces provisoires. La porte ainsi réglée est "habillée" par des profilés de positionnement, en acier, 14, 15 et 16 de section en L. Ces profilés de positionnement font l'interface entre le dormant de la porte, comportant des profilés métalliques de section en 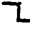 17, 18 et 19, et le pourtour de l'ouverture 13.

Ces profilés en 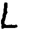 et en 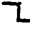 sont soudés contre l'autre pièce par un petit cordon de soudure le long de la paroi de trous oblongs effectués sur l'une des deux pièces à souder et sur une partie seulement de la longueur du périmètre de la paroi de ces trous.

Sur la figure 2 ont été représentés quelques-uns des trous 8 exécutés dans les profilés 14, 15 et 16 en 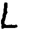 pour leur soudage contre la cloison 12. Sur les figures 3 et 4, on a figuré par des traits fins 20, 21 et 22 les lignes le long desquelles sont effectués les trous pour le soudage des profilés de dormant à section en 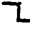 respectivement 17, 18 et 19 contre les profilés de positionnement en 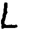 14, 15 et 16.

Par cette façon de procéder, il ne se produit aucune déformation ni générale ni locale des tôles soudées et elles restent parfaitement bien appliquées l'une contre l'autre sur toute la longueur. En outre, ce procédé est très économique en soudure.

La figure 5 est une vue agrandie du détail V de la figure 4. Les traits fins 23 et 24 figurent les lignes de trous 8 pour les soudures. On a figuré en 25 la charnière du battant 26 de porte.

Un seuil de porte 27 est également fixé sur le pont métallique 28. Ce détail VI de la figure 3 est montré en vue agrandie sur la figure 6.

Il est composé de deux profilés en U : 29 et 30 assemblés l'un dans l'autre en sens inverse et soudés ensemble, de la même façon que pour les profilés en 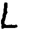 et en 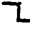 ,par des cordons de soudure 31 sur une partie de la circonférence de trous 8. Le profil 30 est une pièce liée au dormant de la porte, tandis que le profilé 29 est une pièce rapportée. Le profilé inférieur 29 est soudé au pont 28. L'épaisseur entre le niveau du pont 28 et le seuil 27 est comblé ensuite par le revêtement de sol. De même, l'épaisseur des profilés 14, 15, 16 est comblée par une isolation contre la cloison 12 et une paroi de finition.

Des essais ont montré que ce montage avec ce procédé de soudure permet d'obtenir le classement incendie "A 60".

Un tel montage nécessite beaucoup moins de longueur de soudure que le montage classique de la figure 1 et le temps de pose de la porte est réduit pratiquement des deux tiers.

## Revendications

1. Disposition de montage d'une porte métallique dans une ouverture (13) d'une cloison métallique (12), caractérisée par le fait que le montage est effectué par le moyen de profilés métalliques de positionnement (14, 15, 16) à section en 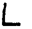 , l'une des ailes du 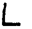 étant soudée à recouvrement contre le bord de l'ouverture (13) de ladite cloison (12) et en ce que le dormant de la porte comporte des profilés métalliques (17, 18, 19) à section, comportant trois tronçons disposés en 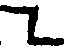 , soudés par le tronçon central contre l'autre aile desdits profilés de positionnement (14, 15, 16), les soudures desdits profilés de positionnement et desdits profilés métalliques étant effectuées par un petit cordon de soudure contre la paroi de trous oblongs effectués sur l'une des deux pièces à souder et sur une partie seulement de la longueur du périmètre de ladite paroi desdits trous.

2. Disposition selon la revendication 1, caractérisée par le fait qu'un seuil de porte (27), constitué d'un profil de section en 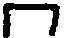 , qui est une partie intégrante du dormant de la porte, est emboîté et soudé dans un profil de section en 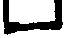 préalablement soudé au sol, les soudures étant faites de la même façon que pour les soudures des profilés de positionnement et des profilés métalliques.
